# EUROPEAN PATENT APPLICATION

(11) **EP 4 462 552 A1**
(43) Date of publication of application: **13.11.2024**
(21) Application number: 23752274.3
(22) Date of filing: 01.02.2023
(51) Int. Cl.: H01M 10/615, H01M 10/6554, H01M 10/6571

(54) **HEATING ASSEMBLY, BATTERY AND ELECTRIC DEVICE**

(30) Priority: 10.02.2022 CN 202220272370 U
(71) Applicant: Contemporary Amperex Technology Co., Limited, Ningde, Fujian 352100 (CN)
(72) Inventor: LI, Xingxing, Ningde, Fujian 352100 (CN); CHEN, Zhiming, Ningde, Fujian 352100 (CN); HUANG, Xiaoteng, Ningde, Fujian 352100 (CN)
(74) Representative: Jacob, Reuben Ellis
(86) International application number: PCT/CN2023/074097
(87) International publication number: WO 2023/151494

(57) **Abstract**

The present application relates to a heating assembly, a battery and an electric device. A heating sheet (31) is attached to the surface of a battery cell (20) to heat the battery cell (20). When the battery cell (20) is heated and expanded, cracks (3111) can break under the expansion force of the battery cell (20), so that the heating sheet (31) is deformed synchronously with the battery cell (20), thereby preventing the heating sheet (31) from being separated from the battery cell (20). Therefore, the heating efficiency of the heating sheet (31) on the battery cell (20) can be improved.

## Description

### CROSS-REFERENCE TO RELATED APPLICATIONS

This application claims priority to Chinese Patent Application No. 202220272370.0, filed on February 10, 2022 and entitled "HEATING ASSEMBLY, BATTERY, AND ELECTRICAL DEVICE", which is incorporated herein by reference in its entirety.

### TECHNICAL FIELD

This application relates to the field of battery technology, and in particular, to a heating assembly, a battery, and an electrical device.

### BACKGROUND

A power battery needs to be heated during use. To meet the heating requirements of the power battery, a heating film with a resistance wire is typically used in the prior art. By affixing the heating film with a resistance wire to a surface that needs to be heated on the power battery, this method can heat the power battery without affecting the energy density of the power battery.

However, during the heating, the power battery may expand with the rise of temperature. The expansion will cause the heating film affixed to the surface of the power battery to fail, and result in failure to achieve the heating effect.

### SUMMARY

In view of the situation above, in response to the problem that a heating film is prone to fail when a power battery expands during heating, this application provides a heating assembly, a battery, and an electrical device.

According to a first aspect, this application provides a heating assembly, including a heating sheet affixed to a surface of a battery cell. At least one pre-cracking portion and at least one crack-stopping portion are disposed on the heating sheet. Each pre-cracking portion includes cracks. Each crack-stopping portion is connected between the cracks. The cracks in each pre-cracking portion are able to break under an expansion force of the battery cell and cause a heating sheet part enclosed between the cracks to form a cracking portion that deforms synchronously with the battery cell.

In the technical solution of an embodiment of this application, under the action of the expansion force of the battery cell, the heating sheet can break along the crack, and deform synchronously with the battery cell, thereby preventing the heating sheet from being debonded and detached from the battery cell, and in turn, increasing the firmness of connection between the heating sheet and the battery cell. In addition, the crack can control the heating sheet to break along a preset path. The crack-stopping portion can prevent the crack from breaking ceaselessly and causing the heating sheet to be completely disconnected, thereby avoiding the risk of heating failure caused by the disconnection of a heating element in the heating sheet, and improving safety performance of the heating sheet.

In some embodiments, each crack is configured to extend in a bent manner along a continuous path, and the crack-stopping portion is connected to a head end and a tail end of the crack.

In the technical solutions of these embodiments of this application, the crack and the crack-stopping portion coordinate with each other to cause the crack to break along the preset path. The crack is attached to the heating sheet by the crack-stopping portion. On the premise of ensuring the normal operation of the heating sheet, this arrangement improves the deformability of the heating sheet.

In some embodiments, the crack-stopping portion in each pre-cracking portion includes a crack-stopping line and crack-stopping holes. The crack-stopping line is in form of a solid line. The crack-stopping holes are created at the head end and the tail end of the crack. The crack-stopping line is connected between the crack-stopping holes located at the head end and the tail end.

In the technical solutions of these embodiments of this application, the crack-stopping holes and the crack-stopping line can block a breakage path of the crack, prevent the cracking portion from being detached from the heating sheet, and ensure normal electrical conduction and heat emission of the heating sheet.

In some embodiments, the crack is configured to be two sub-cracks. The two sub-cracks are opposite to each other and spaced apart. Each of the sub-cracks extends along a first direction and includes a first end located at an edge of the heating sheet and a second end away from the edge of the heating sheet. The crack-stopping portion is connected between the second ends of the two sub-cracks.

In the technical solutions of these embodiments of this application, the breakage starts from the edge of the heating sheet, thereby reducing the expansion force required for breaking the crack, and making the bonding tighter between the heating sheet and the battery cell.

In some embodiments, the crack-stopping portion in each pre-cracking portion includes a crack-stopping line and crack-stopping holes. The crack-stopping line is in form of a solid line. The crack-stopping hole is created at the second end of each sub-crack. The crack-stopping line is connected between two adjacent crack-stopping holes.

In the technical solutions of these embodiments of this application, the crack-stopping holes and the crack-stopping line can block a breakage path of each sub-crack, prevent the cracking portion from being detached from the heating sheet, and ensure normal electrical conduction and heat emission of the heating sheet.

In some embodiments, the cracks are configured to be in form of dashed lines.

In the technical solutions of these embodiments of this application, the cracks are configured to be in form of dashed lines so that the cracks can break smoothly under the action of the expansion force of the battery cell.

In some embodiments, the heating assembly includes a protection film. The protection film covers a surface of the heating sheet on one side along a thickness direction of the heating sheet.

In the technical solutions of these embodiments of this application, the protection film not only protects the heating sheet, but also enables the heating sheet to heat the battery module.

In some embodiments, a viscosity of the protection film is less than or equal to 1 N/cm.

In the technical solutions of these embodiments of this application, the protection film protects the heating sheet during production, and avoids abrasion of the surface of the heating sheet. When the heating sheet is affixed to the battery cell to heat up the battery cell, if the heating sheet deforms along with the battery cell, the protection film can be detached from the heating sheet under the action of an expansion force due to a low viscosity, without interfering with the heating sheet in deforming along with the expansion of the battery cell.

In some embodiments, the protection film includes one or more materials selected from polyethylene terephthalate, polyimide, or polypropylene.

According to a second aspect, this application provides a battery, including a box, a battery cell disposed in the box, and the heating assembly disclosed above. The heating assembly is disposed on a surface of the battery cell in a contact manner.

According to a third aspect, this application provides an electrical device, including an electrical main body and the battery disclosed above.

In the heating assembly, battery, and electrical device described above, the heating sheet is affixed to the surface of the battery cell to heat the battery cell. When the battery cell thermally expands, the cracks can break under the expansion force of the battery cell, so that the heating sheet deforms synchronously with the battery cell to prevent the heating sheet from being detached from the battery cell, thereby improving the efficiency of the heating sheet in heating the battery cell.

The foregoing description is merely an overview of the technical solutions of this application. Some specific embodiments of this application are described below illustratively to enable a clearer understanding of the technical solutions of this application, enable implementation of the technical solutions based on the subject-matter hereof, and make the foregoing and other objectives, features, and advantages of this application more evident and comprehensible.

### BRIEF DESCRIPTION OF DRAWINGS

By reading the following detailed description of embodiments, a person of ordinary skill in the art becomes clearly aware of various other advantages and benefits. The drawings are merely intended to illustrate the embodiments, but not to limit this application. In all the drawings, the same reference numeral represents the same component. In the drawings:
FIG. 1 is a schematic structural diagram of a vehicle according to an embodiment of this application;
FIG. 2 is a schematic structural exploded view of a battery according to an embodiment of this application;
FIG. 3 is a schematic structural exploded view of a battery cell according to an embodiment of this application;
FIG. 4 is a schematic structural diagram of a heating assembly according to an embodiment of this application;
FIG. 5 is a schematic structural diagram of a heating sheet according to an embodiment of this application;
FIG. 6 is a schematic structural diagram of a heating sheet according to another embodiment of this application;
FIG. 7 is a close-up view of a part A shown in FIG. 6; and
FIG. 8 is a schematic structural diagram of a protection film according to an embodiment of this application.

List of reference numerals: 1000. vehicle; 100. battery; 200. controller; 300. motor; 10. box; 20. battery cell; 11. first part; 12. second part; 21. end cap; 22. housing; 23. cell assembly; 30. heating assembly; 31. heating sheet; 32. protection film; 311. pre-cracking portion; 312. crack-stopping portion; 313. third connecting hole; 314. fourth connecting hole; 321. first connecting hole; 322. second connecting hole; 3111. crack; 21a. electrode terminal; 312a. crack-stopping line; 312b. crack-stopping hole; 3111a. sub-crack; a. first direction.

### DETAILED DESCRIPTION OF EMBODIMENTS

Some embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific embodiments but not to limit this application. The terms "include" and "contain" and any variations thereof used in the specification, claims, and brief description of drawings of this application are intended as non-exclusive inclusion.

In the description of some embodiments of this application, the technical terms "first" and "second" are merely intended to distinguish between different items but not intended to indicate or imply relative importance or implicitly specify the number of the indicated technical features, specific order, or order of precedence. In the description of some embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In the description of embodiments of this application, the term "a plurality of" means two or more (including two). Similarly, "a plurality of groups" means two or more groups (including two groups), and "a plurality of pieces" means two or more pieces (including two pieces).

In the description of embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In the description of this application, unless otherwise expressly specified and defined, the technical terms such as "mount", "concatenate", "connect", and "fix" are generic in a broad sense, for example, mean a fixed connection, a detachable connection, or a one-piece configuration; or mean a mechanical connection or an electrical connection; or mean a direct connection or an indirect connection implemented through an intermediary; or mean internal communication between two components or interaction between two components. A person of ordinary skill in the art can understand the specific meanings of the terms in some embodiments of this application according to specific situations.

Currently, as can be seen from the market trend, the application of power batteries is increasingly extensive. Power batteries are not only used in energy storage power systems such as hydro, thermal, wind, and solar power stations, but also widely used in electric means of transport such as electric bicycles, electric motorcycles, and electric vehicles, and used in many other fields such as military equipment and aerospace. The market demand for power batteries keeps soaring with the increase of the application fields of the power batteries.

On the one hand, a power battery needs to be heated during use, so that a corresponding thermal management structure needs to be arranged to heat up the battery. On the other hand, with the wide application of power batteries, people require a higher energy density and a smaller size of the power batteries. To meet the two requirements above, in the prior art, the power battery is typically heated by using a heating film with a resistance wire.

Specifically, the heating film with a built-in resistance wire is bonded by adhesive to a surface that needs to be heated on the power battery. The resistance wire is energized and generates heat to heat up the power battery. This method not only increases the energy density of the power battery, but also achieves the purpose of heating the power battery. However, during the heating, the power battery may expand and deform with the rise of temperature of the power battery. With the gradual increase in the amount of deformation of the power battery, the heating film may be debonded from the power battery, and the heating film may be detached from the surface of the power battery. In addition, the heating film may break off due to the deformation of the power battery.

After the heating film is detached from the power battery, not only the heating will fail, but also the heating film will dry-burn for lack of contact with a heat transfer medium, thereby causing thermal runaway. When the heating film breaks off, a short circuit may occur, making the power battery out of service.

In view of the above problems, the applicant hereof finds that a cracking portion and a crack-stopping portion may be disposed on the heating sheet, so that the heating sheet can break off under the expansion force of the power battery and deform synchronously with the power battery, thereby preventing the heating film from being debonded from the power battery, and in turn, effectively improving the bonding strength between the heating sheet and the power battery.

The battery cell disclosed in embodiments of this application is applicable to, but not limited to use in, electrical devices such as a vehicle, watercraft, or aircraft. An embodiment of this application provides an electrical device powered by a battery. The electrical device may be, but is not limited to, a mobile phone, a tablet, a laptop computer, an electric toy, an electric tool, an electric power cart, an electric vehicle, a ship, a spacecraft, or the like. The electric toy may include stationary or mobile electric toys, such as a game console, an electric car toy, an electric ship toy, an electric airplane toy, and the like. The spacecraft may include an airplane, a rocket, a space shuttle, a spaceship, and the like.

For ease of description in the following embodiments, a vehicle 1000 is used as an example of the electrical device according to an embodiment of this application.

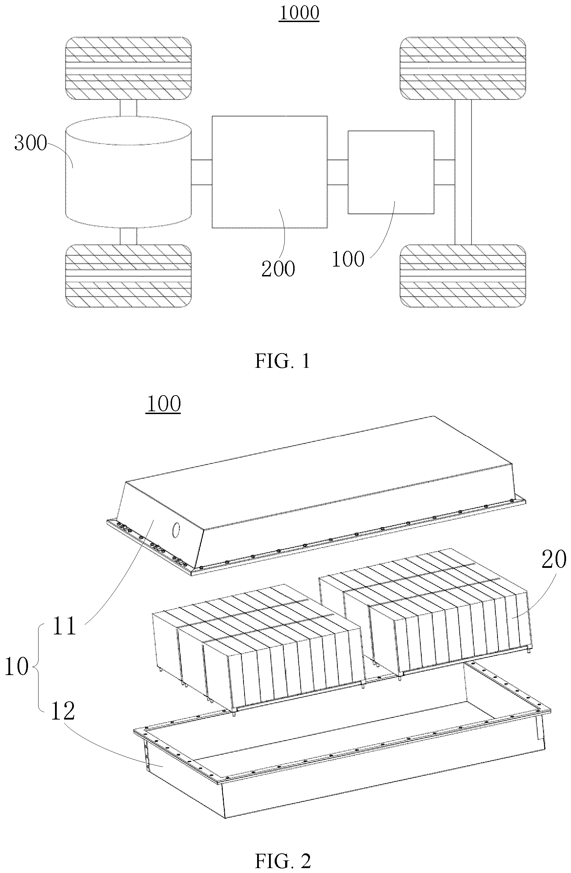

Referring to FIG. 1, FIG. 1 is a schematic structural diagram of a vehicle 1000 according to some embodiments of this application. The vehicle 1000 may be an oil-fueled vehicle, a natural gas vehicle, or a new energy vehicle. The new energy vehicle may be a battery electric vehicle, a hybrid electric vehicle, a range-extended electric vehicle, or the like. A battery 100 is disposed inside the vehicle 1000. The battery 100 may be disposed at the bottom, front, or rear of the vehicle 1000. The battery 100 may be configured to supply power to the vehicle 1000. For example, the battery 100 may serve as an operating power supply of the vehicle 1000. The vehicle 1000 may further include a controller 200 and a motor 300. The controller 200 is configured to control the battery 100 to supply power to the motor 300, for example, to meet electrical energy requirements in starting, navigating, or running the vehicle 1000.

In some embodiments of this application, the battery 100 serves not only as an operating power supply of the vehicle 1000, but may also serve as a driving power supply of the vehicle 1000 to provide driving power for the vehicle 1000 in place of or partly in place of fuel oil or natural gas.

Referring to FIG. 2, FIG. 2 is an exploded view of a battery 100 according to some embodiments of this application. The battery 100 includes a box 10 and a battery cell 20. The battery cell 20 is accommodated in the box 10. The box 10 is configured to provide an accommodation space for the battery cell 20. The box 10 may be in various structures. In some embodiments, the box 10 may include a first part 11 and a second part 12. The first part 11 and the second part 12 fit and cover each other. The first part 11 and the second part 12 together define an accommodation space configured to accommodate the battery cell 20. The second part 12 may be a hollow structure opened at one end. The first part 11 may be a plate-like structure. The first part 11 fits on an opening side of the second part 12 so that the first part 11 and the second part 12 together define the accommodation space. Alternatively, both the first part 11 and the second part 12 may be hollow structures opened at one side. The opening side of the first part 11 fits the opening side of the second part 12. Definitely, the box 10 formed by the first part 11 and the second part 12 may be in various shapes, such as a cylinder or a cuboid.

The battery 100 may contain a plurality of battery cells 20. The plurality of battery cells 20 may be connected in series, parallel, or series-and-parallel pattern. The series-and-parallel pattern means a combination of series connection and parallel connection of the plurality of battery cells 20. The plurality of battery cells 20 may be directly connected in series, parallel, or series-and-parallel pattern, and then the whole of the plurality of battery cells 20 may be accommodated in the box 10. Alternatively, the plurality of battery cells 20 may be connected in series, parallel, or series-and-parallel pattern to form a battery 100 in the form of battery modules first. A plurality of battery modules are then connected in series, parallel, or series-and-parallel pattern to form a whole for being accommodated in the box 10. The battery 100 may further include other structures. For example, the battery 100 may further include a busbar component. The busbar component is configured to implement electrical connection between the plurality of battery cells 20.

Each battery cell 20 may be, but is not limited to, a secondary battery or primary battery; or, may be a lithium-sulfur battery, a sodium-ion battery, or a magnesium-ion battery. The battery cell 20 may be in a shape such as a cylinder, a flat body, a cuboid, or other shapes.

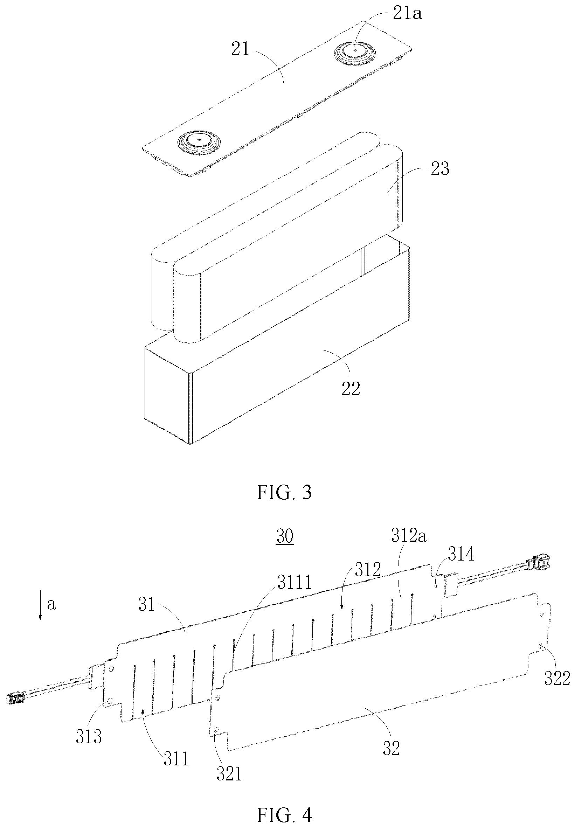

Referring to FIG. 3, FIG. 3 is a schematic structural exploded view of a battery cell 20 according to some embodiments of this application. The battery cell 20 is a minimum unit of a battery. As shown in FIG. 3, the battery cell 20 includes an end cap 21, a housing 22, an electrode assembly 23, and other functional components.

The end cap 21 is a component that fits and covers the opening of the housing 22 to isolate the internal environment of the battery cell 20 from the external environment. Not restrictively, the shape of the end cap 21 may be adapted to the shape of the housing 22 to fit the housing 22. Optionally, the end cap 21 may be made of a material of appropriate hardness and strength (such as aluminum alloy), so that the end cap 21 is not prone to deform when squeezed or impacted. In this way, the battery cell 20 achieves higher structural strength and higher safety performance. Functional components such as electrode terminals 21a may be disposed on the end cap 21. The electrode terminals 21a may be configured to be electrically connected to the electrode assembly 23 to output or input electrical energy of the battery cell 20. In some embodiments, a pressure relief mechanism configured to release an internal pressure when the internal pressure or temperature of the battery cell 20 reaches a threshold may be further disposed on the end cap 21. The end cap 21 may also be made of a variety of materials such as copper, iron, aluminum, stainless steel, aluminum alloy, or plastic, and the materials are not particularly limited herein. In some embodiments, an insulation piece may be further disposed on an inner side of the end cap 21. The insulation piece may be configured to isolate an electrically connected component in the housing 22 from the end cap 21 to reduce short-circuit risks. For example, the insulator may be plastic, rubber, or the like.

The housing 22 is a component configured to fit the end cap 21 to form an internal environment of the battery cell 20. The formed internal environment may be used to accommodate the electrode assembly 23, an electrolytic solution, and other components. The housing 22 and the end cap 21 may be stand-alone components. An opening may be made on the housing 22. At the opening, the end cap 21 fits with the opening to form the internal environment of the battery cell 20. Not restrictively, the end cap 21 and the housing 22 may be integrated instead. Specifically, the end cap 21 and the housing 22 may form a common connection interface before other components are put into the housing. Subsequently, when the interior of the housing 22 needs to be sealed, the end cap 21 is made to fit with the housing 22. The housing 22 may be in various shapes and sizes, such as a cuboid, cylinder, or hexagonal prism. Specifically, the shape of the housing 22 may be determined depending on the specific shape and size of the electrode assembly 23. The housing 22 may be made of a variety of materials such as copper, iron, aluminum, stainless steel, aluminum alloy, or plastic, without being particularly limited herein.

The electrode assembly 23 is a component that incurs electrochemical reactions in the battery cell 100. The housing 22 may contain one or more electrode assemblies 23. The electrode assembly 23 is primarily formed by winding or stacking a positive electrode plate and a negative electrode plate. A separator is generally disposed between the positive electrode plate and the negative electrode plate. The parts, coated with an active material, of the positive electrode plate and the negative electrode plate, constitute a body portion of the electrode assembly. The part, coated with no active material, of the positive electrode plate and the negative electrode plate separately, constitutes a tab. The positive tab and the negative tab may be located at one end of the body portion together or at two ends of the body portion respectively. In a charge-and-discharge process of the battery, the positive active material and the negative active material react with an electrolytic solution. The tabs are connected to electrode terminals to form a current circuit.

Referring to FIG. 4, FIG. 4 is a schematic diagram of an overall structure of a heating assembly according to an embodiment of this application. An embodiment of this application provides a heating assembly 30, including a heating sheet 31 affixed to a surface of a battery cell 20. At least one pre-cracking portion 311 and at least one crack-stopping portion 312 are disposed on the heating sheet 31. Each pre-cracking portion 311 includes cracks 3111. Each crack-stopping portion 312 is connected between the cracks 3111. The cracks 3111 in each pre-cracking portion 311 are able to break under an expansion force of the battery cell 20 and cause a heating sheet 31 part enclosed between the cracks 3111 to form a cracking portion that deforms synchronously with the battery cell 20.

It is hereby noted that the battery cell 20 means a minimum unit that constitutes a battery 100. The battery 100 may include a plurality of battery cells 20, and the plurality of battery cells 20 may be connected in series, parallel, or series-and-parallel pattern. The series-and-parallel pattern means a combination of series connection and parallel connection of the plurality of battery cells 20. Alternatively, the plurality of battery cells 20 are connected in series, parallel, or series-and-parallel pattern to form a battery module first, and then a plurality of battery modules are connected in series, parallel, or series-and-parallel pattern to form an entire battery 100.

It is hereby noted that the heating sheet 31 uses a polyimide film as an external insulator, uses a metal foil or a metal wire as an internal conductive and heating element, and is formed by thermal bonding under a high temperature and a high pressure.

Specifically, in this embodiment, a plurality of battery cells 20 need to be arranged to form a battery module first. Subsequently, the heating sheet 31 is affixed to the surface of the battery module by double-sided tape, and the cracks 3111 are disposed in one-to-one correspondence with connection clearances between two adjacent battery cells 20. Therefore, the heating sheet 31 needs to be made into a shape that matches a side profile of the battery module, that is, into an elongated shape, so as to facilitate the close fit between the heating sheet 31 and the battery module.

The heating element inside the heating sheet 31 is energized to generate heat, so as to heat up the battery cell 20. In this process, the battery cell 20 will expand along with the rise of the temperature, thereby causing surface expansion and deformation. The cracks 3111 break off along their own extension paths under the action of the expansion force of the battery cell 20. When the breakage of a crack 3111 extends to the position of the crack-stopping portion 312, the crack-stopping portion 312 can prevent the crack 3111 from continuing to break, thereby preventing the heating sheet 31 from being completely disconnected. In this way, the heating element inside the heating sheet 31 can be routed along the unbroken part to ensure safe heat conduction of the entire heating sheet.

Through the structure above, under the action of the expansion force of the battery cell 20, the heating sheet 31 can deform synchronously with the battery cell 20, thereby preventing the heating sheet 31 from being debonded and detached from the battery cell 20, and in turn, increasing the firmness of connection between the heating sheet 31 and the battery cell 20. In addition, the crack 3111 can control the heating sheet 31 to break along a preset path. The crack-stopping portion 312 can prevent the crack 3111 from breaking ceaselessly and causing the heating sheet 31 to be completely disconnected, thereby avoiding the risk of heating failure caused by the disconnection of the heating element in the heating sheet 31, and improving safety performance of the heating sheet 31.

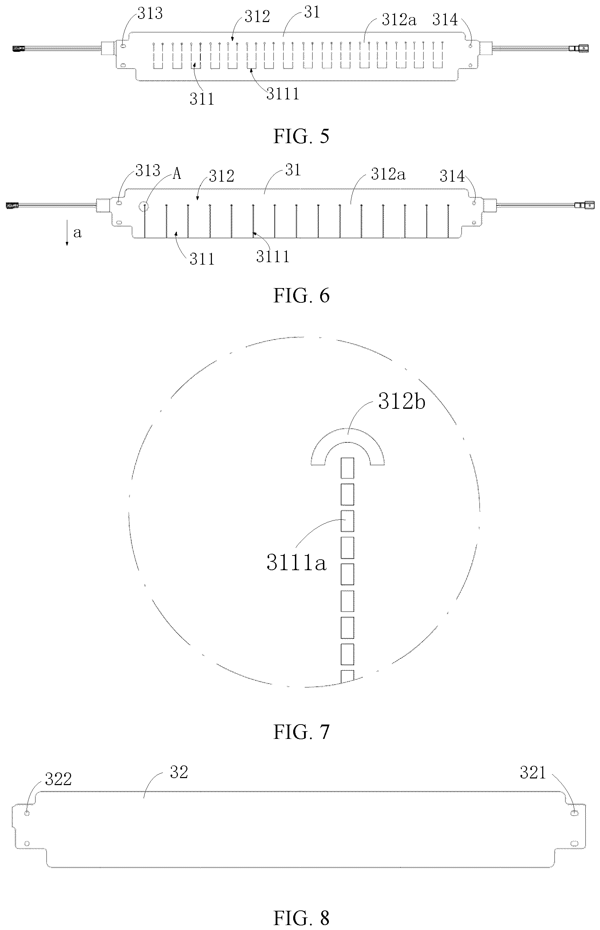

As shown in FIG. 5, FIG. 5 is a schematic structural diagram of a heating sheet according to an embodiment of this application. In some embodiments, each crack 3111 is configured to extend in a bent manner along a continuous path, and the crack-stopping portion 312 is connected to a head end and a tail end of the crack 3111. It is hereby noted that, as shown in FIG. 5, the head end and the tail end of the crack 3111 are located on the same side of the heating sheet 31. Specifically, the crack 3111 is a continuous crack, and the crack-stopping portion 312 is connected to the head end and the tail end of the crack 3111. When the heating sheet 31 expands synchronously with the battery cell 20, the crack 3111 breaks off along the extension direction of the crack, and the crack-stopping portion 312 ensures that the cracking portion is not detached from the heating sheet 31. More specifically, as shown in FIG. 5, the crack 3111 and the crack-stopping portion 312 may close in to form a rectangle. The crack-stopping portion 312 is configured to be one side of the rectangle, and the crack 3111 is configured to be the remaining three sides of the rectangle. In this way, the crack 3111 and the crack-stopping portion 312 coordinate with each other to cause the crack 3111 to break along the preset path. The crack 3111 is attached to the heating sheet 31 by the crack-stopping portion 312. On the premise of ensuring the normal operation of the heating sheet 31, this arrangement improves the deformability of the heating sheet 31.

Further, the crack-stopping portion 312 in each pre-cracking portion 311 includes a crack-stopping line 312a and crack-stopping holes 312b, where the crack-stopping line is in form of a solid line. The crack-stopping holes 312b are created at the head end and the tail end of the crack 3111. The crack-stopping line 312a is connected between the crack-stopping holes 312b located at the head end and the tail end. Specifically in this embodiment, as shown in FIG. 4 and FIG. 5, the crack-stopping line 312a is an imaginary solid line connected between two adjacent crack-stopping holes 312b, and is a part of the heating sheet 31. The crack-stopping holes 312b and the crack-stopping line 312a can block the breakage path of the crack 3111, prevent the cracking portion from being detached from the heating sheet 31, and ensure normal electrical conduction and heat emission of the heating sheet 31. Referring to FIG. 6 and FIG. 7, FIG. 6 is a schematic structural diagram of a heating sheet according to another embodiment of this application, and FIG. 7 is a close-up view of a part A shown in FIG. 3. In some embodiments, the crack 3111 is configured to be two sub-cracks 3111a. The two sub-cracks 3111a are opposite to each other and spaced apart. Each of the sub-cracks 3111a extends along a first direction a and includes a first end located at an edge of the heating sheet 31 and a second end away from the edge of the heating sheet 31. The crack-stopping portion 312 is connected between the second ends of the two sub-cracks 3111a.

Specifically, in this embodiment, the first direction a is a width direction of the heating sheet 31, and the two sub-cracks 3111a are parallel to each other. The first end of each sub-crack 3111a extends to the edge of the heating sheet 31. When the heating sheet expands and deforms along with the battery cell, each sub-crack 3111a begins to break from the first end, and the breakage extends upward along the first direction a until the second end, at which the breakage is stopped by the crack-stopping portion 312.

The breakage starts from the edge of the heating sheet 31, thereby reducing the expansion force required for breaking the crack 3111, and making the bonding tighter between the heating sheet 31 and the battery cell 20.

Further, the crack-stopping portion 312 in each pre-cracking portion 311 includes a crack-stopping line 312a and crack-stopping holes 312b, where the crack-stopping line is in form of a solid line. The crack-stopping hole 312b is created at the second end of each sub-crack 3111a. The crack-stopping line 312a is connected between two adjacent crack-stopping holes 312b. Specifically in this embodiment, as shown in FIG. 4 and FIG. 5, the crack-stopping line 312a is an imaginary solid line connected between two adjacent crack-stopping holes 312b, and is a part of the heating sheet 31. The crack-stopping holes 312b and the crack-stopping line 312a can block the breakage path of each sub-crack 3111a, prevent the cracking portion from being detached from the heating sheet 31, and ensure normal electrical conduction and heat emission of the heating sheet 31.

In addition, the crack-stopping hole 312b is configured to be a U-shaped hole structure opened toward the sub-crack 3111a. When the sub-crack 3111a breaks along an extension direction of the sub-crack, the crack-stopping hole 312b can block the breakage path of the sub-crack 3111a, thereby preventing the cracking portion from being detached from the heating sheet 31. Understandably, the crack-stopping hole 312b may assume another similar structure, such as a circular hole connected to the sub-crack 3111a, thereby also achieving the above purpose, the details of which are omitted here.

In some embodiments, the cracks 3111 are configured to be in form of dashed lines. Specifically, each crack 3111 is linear structure formed by creating a plurality of dashed line holes at intervals, so that the crack 3111 can break off smoothly under the action of the expansion force of the battery cell 20.

Still referring to FIG. 4 together with FIG. 8, FIG. 8 is a schematic structural diagram of a protection film according to an embodiment of this application. In some embodiments, the heating assembly 30 includes a protection film 32. The protection film 32 covers a surface of the heating sheet 31 on one side along a thickness direction of the heating sheet 31. Specifically, the heating sheet 31 includes a first surface and a second surface that are oppositely arranged along the thickness direction of the heating sheet. The protection film 32 is laid over the first surface, and the second surface of the heating sheet 31 is affixed to the lateral face of the battery module. In this way, the protection film not only protects the heating sheet 31, but also enables the heating sheet 31 to heat the battery module.

Specifically, in this embodiment, because a polyimide film is used as an external insulator of the heating sheet 31, the structure of the polyimide film is relatively fragile, and is prone to be damaged during the production to cause insulation failure. In view of this, with the protection film 32 covering a surface of the heating sheet 31 on one side, the protection film 32 can protect the heating sheet 31 and improve the safety performance of the heating sheet 31.

Further, the viscosity of the protection film 32 is less than or equal to 1 N/cm. Specifically, the protection film 32 is a low-viscosity insulation film. In this way, the protection film 32 protects the heating sheet 31 during production, and avoids abrasion of the surface of the heating sheet 31. When the heating sheet 31 is affixed to the battery cell 20 to heat up the battery cell 20, if the heating sheet 31 deforms along with the battery cell 20, the protection film 32 can be detached from the heating sheet 31 under the action of an expansion force due to a low viscosity, without interfering with the heating sheet 31 in deforming along with the expansion of the battery cell 20.

In some embodiments, the protection film 32 includes one or more materials selected from polyethylene terephthalate, polyimide, or polypropylene. Understandably, in some other embodiments, the protection film 32 may also be made of a similar material, the details of which are omitted here.

In addition, to achieve a closer fit between the protection film 32 and the heating sheet 31, the outer contour of the protection film 32 corresponds to the outer contour of the heating sheet 31, so that the protection film and the heating sheet can fit and overlap each other conveniently.

A first connecting hole 321 and a second connecting hole 322 are created on the protection film 32 along the length direction of the protection film, and a third connecting hole 313 and a fourth connecting hole 314 are created on the heating sheet 31 along the length direction of the heating sheet. The first connecting hole 321 corresponds to the third connecting hole 313 along the thickness direction of the heating sheet 31, and the second connecting hole 322 corresponds to the fourth connecting hole 314 along the thickness direction of the heating sheet 31. When the heating sheet 31 and the protection film 32 are simultaneously affixed to the battery cell 20, rivets are inserted into the first connecting hole 321, the second connecting hole 322, the third connecting hole 313, and the fourth connecting hole 314 to implement further connection and fixation of the heating sheet 31 and the protection film 32 to the battery cells 20.

Further, the first connecting hole 321 and the third connecting hole 313 are both configured to be kidney-shaped holes, and the second connecting hole 322 and the fourth connecting hole 314 are both configured to be circular holes. Therefore, the kidney-shaped holes can provide a connection tolerance in the length direction of the heating sheet 31 or protection film 32, so as to facilitate realignment of the heating sheet 31 with the protection film 32.

Based on the same concept as the heating assembly 30, this application provides a battery 100, including a box 10, a battery cell 20 disposed in the box 10, and the heating assembly 30 disclosed above. The heating assembly 30 is disposed on a surface of the battery cell 20 in a contact manner.

Based on the same concept as the battery 100, this application provides an electrical device including an electrical main body and the battery 100 disclosed above.

In practical applications of this application, the protection film 32 is aligned with the heating sheet 31 first, affixed to the lateral face of the battery module by double-sided tape, and then fastened by rivets. The heating sheet 31 is energized and generates heat to heat up the battery module.

With the rise of temperature, each battery cell 20 in the battery module expands and deforms. At the same time, the heating sheet 31 deforms along with the battery cell 20, and the protection film 32 is debonded from the heating sheet 31 during the deformation. The crack 3111 on the heating sheet 31 keeps breaking off along the extension direction of the crack until the breakage reaches the crack-stopping hole 312b. In this way, the heating sheet 31 deforms synchronously with the battery cell 20, and keeps heating up the battery cell.

The heating assembly 30, the battery 100, and the electrical device in the above embodiments exhibit at least the following advantages:
1) The crack 3111 allows the heating sheet 31 to deform synchronously with the battery cell 20 when the battery cell expands and deforms, thereby preventing the heating sheet 31 from being debonded from the battery cell 20, and improving the heating efficiency;
2) The crack-stopping portion 312 can stop the crack 3111 from continuing to break along the extension direction of the crack, so that the crack 3111 is not completely detached from the heating sheet 31, thereby ensuring the integrity of the heating sheet 31;
3) The protection film 32 is designed as a low-viscosity insulation film, and therefore, the protection film not only protects the heating sheet 31 during the production and prevents the heating sheet 31 from being abraded and failing, but is also able to be debonded from the heating sheet 31 when the heating sheet 31 deforms synchronously with the battery cell 20, without interfering with the heating sheet 31 in deforming synchronously with the battery cell 20; and
4) The first connecting hole 321 and the third connecting hole 313 are both designed as kidney-shaped holes, thereby providing a connection tolerance in the length direction, and facilitating realignment of the heating sheet 31 with the protection film 32.

Finally, it is hereby noted that the foregoing embodiments are merely intended to describe the technical solutions of this application but not to limit this application. Although this application has been described in detail with reference to the foregoing embodiments, a person of ordinary skill in the art understands that modifications may still be made to the technical solutions described in the foregoing embodiments, or equivalent replacements may still be made to some or all technical features in the technical solutions. Such modifications and equivalent replacements fall within the scope of the claims and specification hereof without making the essence of the corresponding technical solutions depart from the scope of the technical solutions of the embodiments of this application. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A heating assembly, comprising a heating sheet affixed to a surface of a battery cell, wherein at least one pre-cracking portion and at least one crack-stopping portion are disposed on the heating sheet, each pre-cracking portion comprises cracks, each crack-stopping portion is connected between the cracks, and the cracks in each pre-cracking portion are able to break under an expansion force of the battery cell and cause a heating sheet part enclosed between the cracks to form a cracking portion that deforms synchronously with the battery cell.

2. The heating assembly according to claim 1, wherein each crack is configured to extend in a bent manner along a continuous path, and the crack-stopping portion is connected to a head end and a tail end of the crack.

3. The heating assembly according to claim 2, wherein the crack-stopping portion in each pre-cracking portion comprises a crack-stopping line and crack-stopping holes, wherein the crack-stopping line is in form of a solid line, the crack-stopping holes are created at the head end and the tail end of the crack, and the crack-stopping line is connected between the crack-stopping holes located at the head end and the tail end.

4. The heating assembly according to claim 1, wherein the crack is configured to be two sub-cracks, the two sub-cracks are opposite to each other and spaced apart, each of the sub-cracks extends along a first direction and comprises a first end located at an edge of the heating sheet and a second end away from the edge of the heating sheet, and the crack-stopping portion is connected between the second ends of the two sub-cracks.

5. The heating assembly according to claim 4, wherein the crack-stopping portion in each pre-cracking portion comprises a crack-stopping line and a crack-stopping hole, wherein the crack-stopping line is in form of a solid line, the crack-stopping hole is created at the second end of each sub-crack, and the crack-stopping line is connected between two adjacent crack-stopping holes.

6. The heating assembly according to any one of claims 1 to 5, wherein the cracks are configured to be in form of dashed lines.

7. The heating assembly according to any one of claims 1 to 6, wherein the heating assembly comprises a protection film, and the protection film covers a surface of the heating sheet on one side along a thickness direction of the heating sheet.

8. The heating assembly according to claim 7, wherein a viscosity of the protection film is less than or equal to 1 N/cm.

9. The heating assembly according to claim 7 or 8, wherein the protection film comprises one or more materials selected from polyethylene terephthalate, polyimide, or polypropylene.

10. A battery, comprising a box, a battery cell disposed in the box, and the heating assembly according to any one of claims 1 to 9, wherein the heating assembly is disposed on a surface of the battery cell in a contact manner.

11. An electrical device, comprising an electrical main body and the battery according to claim 10.
